# EUROPÄISCHE PATENTANMELDUNG

(11) **EP 0 600 201 A1**
(43) Veröffentlichungstag der Anmeldung: **08.06.1994**
(21) Anmeldenummer: 93116660.7
(22) Anmeldetag: 15.10.1993
(51) Int. Cl.: F16L 37/092, F16N 25/02

(54) **Schmiermittelverteiler**

(30) Priorität: 01.12.1992 DE 4240292
(71) Anmelder: Lincoln GmbH, D-69190 Walldorf (DE)
(72) Erfinder: Ostermeyer, Günter, D-60322 Frankfurt am Main (DE)
(74) Vertreter: Keil, Rainer A., Dipl.-Phys. Dr.

(57) **Zusammenfassung**

Die Erfindung betrifft einen Schmiermittelverteiler, insbesondere zur Verwendung in Einleitungs-Zentralschmieranlagen, mit einem Verteilerblock (1) bzw. einer Verteilerleiste (2), der bzw. die von einem Hauptströmungskanal (2, 22) durchtreten wird, welcher mit einer Zufuhrleitung (7) für Schmiermittel verbindbar ist und von welchem mindestens ein zu einer Schmierstelle bzw. Dosierpatrone (30) führender Schmierkanal bzw. Seitenkanal (28) abzweigt. Eine einfache, schnelle und zuverlässige Verbindung des Verteilerblockes (1) bzw. der Verteilerleiste (21) mit der Zufuhrleitung (7) oder Kopplung zweier Verteilerblöcke (1a, 1b) bzw. Verteilerleisten (21) bzw. die Ankopplung einer Dosierpatrone (30) an die Verteilerleiste (21) wird erfindungsgemäß dadurch erreicht, daß in dem Hauptströmungskanal (2) bzw. einem Seitenkanal (30) eine Halteeinrichtung (2 bis 6; 24 bis 26) vorgesehen ist, in welche die Zufuhrleitung (7) oder ein Verbindungselement (10) für die Kopplung zweier Verteilerblöcke (1a, 1b) bzw. Verteilerleisten (21) bzw. ein Anschlußstutzen (27) einer Dosierpatrone (30) einsteckbar ist.

## Beschreibung

Die Erfindung betrifft einen Schmiermittelverteiler, insbesondere zur Verwendung in Einleitungs-Zentralschmieranlagen, mit einem Verteilerblock bzw. einer Verteilerleiste, der bzw. die von einem Hauptströmungskanal durchtreten wird, welcher mit einer Zufuhrleitung für Schmiermittel verbindbar ist und von welchem mindestens ein zu einer Schmierstelle bzw. einer Dosierpatrone führender Schmierkanal bzw. Seitenkanal abzweigt.

In Einleitungs-Zentralschmiersystemen werden zum Dosieren und Verteilen von Schmiermitteln Verteiler eingesetzt, über welche das Schmiermittel von der Hauptleitung abgezweigt und zu den einzelne Reibstellen geleitet wird. Man unterscheidet hierbei direkte und indirekte Verteiler. Bei den direkten Verteilern wird der Pumpendruck unmittelbar zum Transport von Schmiermittel von einem Verteiler zur Schmierstelle verwendet. Bei den indirekten Verteilern wird zunächst eine Dosierkammer mit Schmiermittel gefüllt und erst nach der Druckentspannung in der Hauptleitung erfolgt mit Hilfe eines Kolbens und unter Einwirkung einer Druckfeder die Schmiermittelabgabe zur Reibstelle. Beide Verteilerarten werden im allgemeinen in Form von einteiligen Blöcken hergestellt. Die Verteilerblöcke weisen dabei einen mit der Hauptleitung verbundenen Hauptkanal und mehrere Dosierkanäle auf, durch welche Schmiermittel mit bestimmten Mengen an die Reibstelle abgegeben wird.

Die Anzahl der Schmierabgänge eines Verteilers hängt von der Anzahl der zu schmierenden Reibstellen ab. Üblicherweise werden Verteiler mit zwei bis sechs Auslässen gefertigt. Soll aber eine größere Zahl von Reibstellen geschmiert werden, so werden mehrere hintereinander geschaltete Verteiler verwendet, die durch die Hauptleitung miteinander verbunden sind. Die Hauptleitung wird dabei üblicherweise in in den Verteilerblöcken ausgebildete Gewindebohrungen eingeschraubt. Liegen viele Schmierstellen nahe beieinander, so werden mehrere Verteiler über Verbindungsstücke miteinander verbunden, die in die Gewindebohrungen eingeschraubt werden, die sonst der Verbindung mit der Hauptleitung dienen. Als Verbindungsstücke können hierbei auch kurze Rohrabschnitte verwendet werden, welche mittels Gewindeverschraubungen an die Verteiler angeschlossen werden. Das Einschrauben der Verbindungsstücke bzw. das Anschließen der Rohrabschnitte an die Verteilerblöcke bedeutet jedoch einen sehr großen Montageaufwand. Außerdem verbleibt bei der Kopplung mehrerer Verteiler zwischen diesen ein Zwischenraum, durch welchen die Länge des zusammengefaßten Verteilerblocks vergrößert wird. Dies ist jedoch, insbesondere bei engen Einbaubedingungen von Nachteil. Zudem ist es schwierig, den Abstand der Befestigungsbohrungen zwischen den verbundenen Verteilern konstant zu halten.

Neben Verteilern in Blockbauweise werden auch Verteilerleisten mit Dosierpatronen benutzt. Jede der Dosierpatronen weist eine Dosierkammer und die anderen zur Schmiermitteldosierung erforderlichen Teile auf. Die Verteilerleiste beinhaltet ebenso einen Hauptströmungskanal und mehrere davon abzweigende Seitenkanäle, die mit einem Gewinde für das Einschrauben des Anschlußstutzens einer Dosierpatrone enden. Hierbei ergeben sich die gleichen Probleme wie bei einem Anschluß der Zufuhrleitungen oder dem Verbinden zweier Verteilerblöcke bzw. -leisten.

Aufgabe der Erfindung ist es, einen Verteiler der eingangs genannten Art zu schaffen, welcher auf einfache und schnelle Weise den Anschluß einer Zufuhrleitung oder eines Verbindungselements bzw. einer Dosierpatrone ermöglicht.

Diese Aufgabe wird mit der Erfindung im wesentlichen dadurch gelöst, daß in den Hauptströmungskanal bzw. den Seitenkanal eine Halteeinrichtung vorgesehen ist, in welche die Zufuhrleitung oder ein Verbindungselement für die Kopplung zweier Verteilerblöcke oder zweier Verteilerleisten bzw. ein Anschlußstutzen der Dosierpatrone einsteckbar ist.

In Weiterbildung der Erfindung weist die Halteeinrichtung eine einstückig bzw. formschlüssig in dem Verteilerblock bzw. in der Verteilerleiste aufgenommene Buchse auf. Wird der Verteilerblock bzw. die Verteilerleiste aus Kunststoff bspw. durch Spritzgießen hergestellt, so kann die Buchse beim Formvorgang mit in den Block bzw. die Leiste eingeformt werden, so daß bei beschleunigter Herstellung eine zuverlässige Verbindung von Buchse und Verteilerblock gewährleistet ist. Wird der Verteilerblock bzw. die Verteilerleiste dagegen aus Metall hergestellt, so kann auf eine gesonderte Buchse verzichtet werden und das Zangenelement kann direkt in die bspw. durch Spanung entsprechend ausgeformten Enden des Hauptströmungskanals bzw. der Seitenkanäle eingesetzt werden.

Bei einer bevorzugten Ausgestaltung der Erfindung ist vorgesehen, daß in die Halteeinrichtung ein Zangenelement zur klemmschlüssigen Aufnahme der Zufuhrleitung oder des Verbindungselements bzw. des Anschlußstutzens einsetzbar ist. Durch eine entsprechende Ausbildung der Buchse wird das Zangenelement bspw. formschlüssig zuverlässig in der Buchse gehalten. Das Zangenelement wird durch Einstecken der Zufuhrleitung oder des Verbindungselements bzw. des Anschlußstutzens auseinandergedrückt, so daß diese durch die dabei entstehende Spannung des Zangenelements zuverlässig in der Halteeinrichtung gehalten werden.

Um bei der Kopplung mehrerer Verteilerblöcke bzw. Verteilerleisten eine möglichst kompakte Gesamtheit zu erreichen, ist erfindungsgemäß vorgesehen, daß das Verbindungselement mit seiner halben Länge in den Verteilerblock bzw. der Verteilerleiste einsetzbar ist. Somit liegen die aneinander gekoppelten Verteilerblöcke bzw. Verteilerleisten mit ihren Stirnflächen platzsparend gegeneinander.

Auf einfache Weise kann die Positionierung der Zufuhrleitung oder des Verbindungselements bzw. des Anschlußstutzens in dem Verteilerblock durch einen in dem Hauptströmungskanal bzw. in dem Seitenkanal ausgebildeten Anschlag erleichtert werden, gegen welchen ein Ende der Zufuhrleitung bzw. des Anschlußstutzens oder des Verbindungselements anliegt.

Ein unerwünschtes Austreten des Schmiermittels an der jeweiligen Anschlußstelle wird zuverlässig dadurch verhindert, daß gemäß einer weiteren Ausgestaltung der Erfindung zwischen der Halteeinrichtung und der Zufuhrleitung oder dem Verbindungselement bzw. dem Anschlußstutzen ein Dichtelement vorgesehen ist.

In Weiterbildung der Erfindung ist an einer Stirnfläche eines Verteilerblocks bzw. einer Verteilerleiste zum Koppeln zweier Verteilerblöcke bzw. zweier Verteilerleisten eine entsprechende Aussparung an der gegenüberliegenden Stirnfläche eines zweiten Verteilerblocks bzw. der zweiten Verteilerleiste so zugeordnet, daß in die einander zugeordneten Aussparungen ein Stift einsetzbar ist. Damit wird eine Verdrehung der gekoppelten Verteilerblöcke bzw. Verteilerleisten gegeneinander ausgeschlossen.

Die Verdrehsicherung kann jedoch vorteilhafterweise auch auf andere formschlüssige Weise ausgeführt sein, bspw. durch an der Stirnfläche eines ersten Verteilerblockes bzw. einer ersten Verteilerleiste ausgebildete Vorsprünge, welche in an der gegenüberliegenden Stirnfläche eines zweiten Verteilerblockes bzw. einer zweiten Verteilerleiste ausgebildete Aussparungen eingreifen.

Weitere Ziele, Vorteile, Merkmale und Anwendungsmöglichkeiten der Erfindung ergeben sich aus der nachfolgenden Beschreibung eines Ausführungsbeispieles und der Zeichnung. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rüßckbeziehung.

Es zeigen:
- Fig. 1: eine teilweise aufgebrochene Seitenansicht eines erfindungsgemäßen Verteilerblockes,
- Fig. 2: eine teilweise aufgebrochene Seitenansicht zweier miteinander gekoppelter Verteilerblöcke, außen weggebrochen, und
- Fig. 3: eine Schnittdarstellung einer die Erfindung aufweisenden Verteilerleiste, außen weggebrochen.

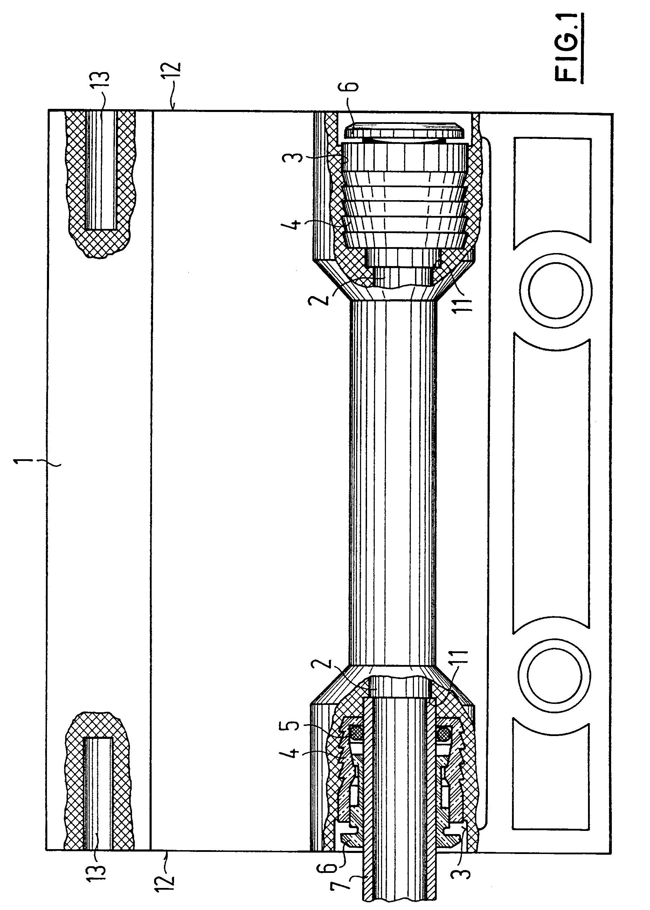

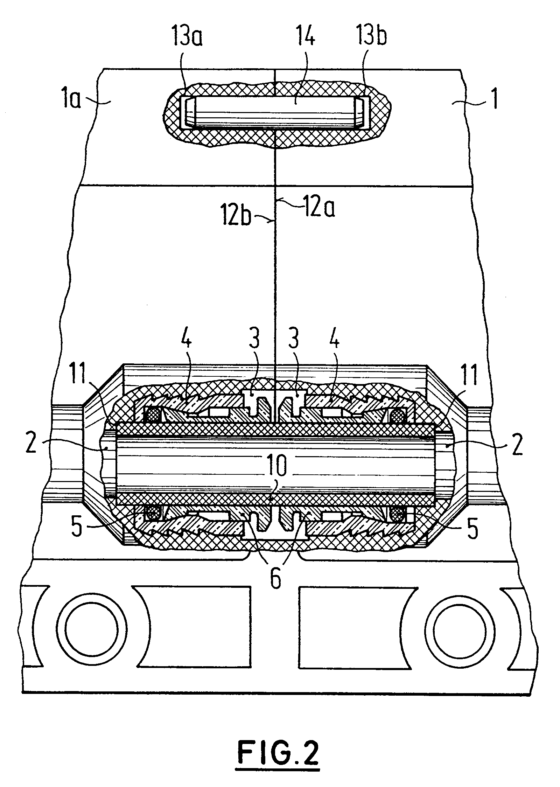

Die in den Fig. 1 und 2 dargestellten Verteilerblöcke 1 weisen einen in Längsrichtung verlaufenden Hauptströmungskanal 2 auf. Der Hauptströmungskanal 2 hat an seinen beiden Enden eine Erweiterung 3, in welche eine Buchse 4 mittels Verzahnung formschlüssig eingesetzt ist. Der Verteilerblock 1 kann bspw. aus einem faserverstärkten Kunststoff hergestellt werden, wobei die Buchsen 4 beim Spritzgießen mit eingeformt werden. In die Buchse 4 ist ein als O-Ring ausgebildetes Dichtungselement 5 sowie ein Zangenelement 6 eingesetzt. Das Zangenelement 6 ist elastisch und wird durch die Buchse 4 formschlüssig in dem Verteilerblock 1 gehalten. Wird der Verteilerblock 1 nicht aus Kunststoff, sondern aus Metall hergestellt, so kann auf eine gesonderte Buchse verzichtet werden. In diesem Fall werden die Erweiterungen 3 in dem Hauptströmungskanal 2 des Verteilerblocks 1 bspw. durch spanende Bearbeitung derart ausgeformt, daß das Zangenelement 6 formschlüssig in der Erweiterung 3 gehalten wird, wie dies bei der Formgebung der Buchse 4 der Fall ist.

In das Zangenelement 6 ist, bei Fig. 1, links eine Zufuhrleitung 7 eingesteckt. Beim Einstecken wird das Zangenelement 6 derart nach außen in die Gegenform der Buchse 4 gedrückt, daß die Zufuhrleitung 7 von der dadurch bedingten Spannung des Zangenelements 6 fest eingeklemmt in dem Verteilerblock 1 gehalten wird. In der rechten Bildhälfte von Fig. 1 ist die Buchse 4 mit dem stirnseitig herausragenden Zangenelement 6 noch einmal ungeschnitten in die endseitige Erweiterung 3 des Hauptströmungskanals 3 dargestellt.

Sollen, wie in Fig. 2 dargestellt, zwei Verteilerblöcke 1a und 1b miteinander gekoppelt werden, so wird anstelle der Zufuhrleitung 7 ein rohrförmiges Verbindungselement 10 beidseitig in die in den beiden benachbarten Verteilerblöcken 1a, 1b angeordneten Zangenelemente 6 eingesteckt. Das Verbindungselement 10 kann bspw. ein Abschnitt des Hauptleitungsrohres sein. Die Befestigung des Verbindungselementes 10 erfolgt in jedem Zangenelement 6 genauso wie die Befestigung der Zuführleitung 7 nach Fig. 1. Um eine möglichst kompakte Anordnung der gekoppelten Verteilerblöcke 1a, 1b zu erreichen, ist die Länge des Verbindungselements 10 so bestimmt, daß es jeweils mit seiner halben Länge von dem jeweiligen Hauptströmungskanal 2 der Verteilerblöcke 1a, 1b aufgenommen wird. Um eine festgelegte Position des Verbindungselements 10 in dem Hauptsrömungskanal 2 zu erreichen, ist in diesem ein als Absatz 11 ausgebildeter Anschlag vorgesehen, gegen den das Verbindungselement 10 beim weitestmöglichen Einstecken anliegt. Bei einer Kopplung der Verteilerblocke 1a, 1b liegen somit auch deren Stirnflächen 12a, 12b direkt aneinander an, so daß der geringst mögliche Platzbedarf erreicht wird.

Um ein Verdrehen der gekoppelten Verteilerblöcke 1a, 1b gegeneinander zu verhindern, sind in den aneinanderliegenden Stirnflächen 12a, 12b korrespondierende Aussparungen 13a, 13b vorgesehen, in die ein Stift 14 eingesetzt ist. Die Verdrehsicherung kann aber auch auf andere Weise formschlüssig erfolgen, bspw., indem an der Stirnfläche 12a (nicht dargestellte) Vorsprünge in entsprechende (nicht dargestellte) Aussparungen an der Stirnfläche 12b eingreifen.

Durch die Verwendung einer Steckverbindung zum Anschluß einer Zufuhrleitung an einen Verteilerblock bzw. die Kopplung zweier Verteilerblöcke wird eine schnelle und sichere Verbindung ermöglicht, wobei außerdem durch entsprechende Gestaltung des Verbindungselements eine optimale Platzausnutzung erreicht wird.

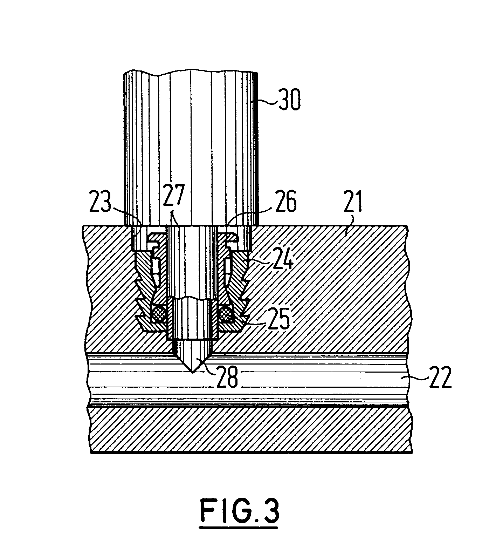

Das gleiche Verbindungsprinzip kann, wie in Fig. 3 veranschaulicht, beim Anschluß sogenannter Dosierpatronen 30 an Verteilerleisten 21 angewendet werden. Die Verteilerleiste 21 hat einen Hauptströmungskanal 22, von welchem mehrere Seitenkanäle 28, von welchen nur einer dargestellt ist, abzweigen. Die Seitenkanäle 28 sind ebenfalls endseitig mit einer Erweiterung 23 für die formschlüssige Aufnahme einer Buchse 24 ausgestattet, von welcher ein ringförmiges Dichtungselement 25 und ein Zangenelement 26 aufgenommen ist, Beim Einstecken einer Dosierpatrone mit ihrem rohrförmigen Anschlußstutzen 27 weitet sich das elastische Zangenelement 26 unter Erzeugung einer Haltespannung auf und wird in der Buchse 24 aufgrund der gegeneinander wirkenden Klemmflächen formschlüssig gehalten, während der Anschlußstutzen 27 zuverlässig und dicht festgeklemmt ist. Somit kann jede Dosierpatrone 30, welche eine Dosierkammer und andere zur Schmiermitteldosierung erforderlichen Teile enthält, einfach und schnell montiert werden. Auf gleiche Weise ist auch der Anschluß von Zufuhrleitungen an die Verteilerleiste 21 oder die Kopplung einzelner Verteilerleisten 21 möglich.

### Bezugszeichenliste:

- 1a, 1b: Verteilerblock
- 2: Hauptströmungskanal
- 3: Erweiterung
- 4: Buchse
- 5: Dichtungselement
- 6: Zangenelement
- 7: Zufuhrleitung
- 10: Verbindungselement
- 11: Absatz
- 12a, 12b: Stirnfläche
- 13a, 13b: Aussparung
- 14: Stift
- 21: Verteilerleiste
- 22: Hauptströmungskanal
- 23: Erweiterung
- 24: Buchse
- 25: Dichtungselement
- 26: Zangenelement
- 27: Anschlußstutzen
- 28: Seitenkanal
- 30: Dosierpatrone

## Patentansprüche

1. Schmiermittelverteiler, insbesondere zur Verwendung in Einleitungs-Zentralschmieranlagen, mit einem Verteilerblock (1) bzw. einer Verteilerleiste (21), der bzw. die von einem Hauptströmungskanal (2, 22) durchtreten wird, welcher mit einer Zufuhrleitung (7) für Schmiermittel verbindbar ist und von welchem mindestens ein zu einer Schmierstelle bzw. einer Dosierpatrone (30) führender Schmierkanal bzw. Seitenkanal (28) abzweigt, dadurch gekennzeichnet, daß in den Hauptströmungskanal (2) bzw. den Seitenkanal (30) eine Halteeinrichtung (4 bis 6; 24 bis 26) vorgesehen ist, in welche die Zufuhrleitung (7) oder ein Verbindungselement (10) für die Kopplung zweier Verteilerblöcke (1a, 1b) oder zweier Verteilerleisten (21) bzw. ein Anschlußstutzen (27) der Dosierpatrone (30) einsteckbar ist.

2. Verteiler nach Anspruch 1, dadurch gekennzeichnet, daß die Halteeinrichtung (4 bis 6; 24 bis 26) eine einstückig bzw. formschlüssig in dem Verteilerblock (1) bzw. in der Verteilerleiste (21) aufgenommene Buchse (4, 24) aufweist.

3. Verteiler nach Anspruch 1 oder 2, dadurch gekennzeichnet, daß in die Halteeinrichtung (4 bis 6; 24 bis 26) ein Zangenelement (6; 26) zur klemmenschlüssigen Aufnahme der Zufuhrleitung (7) oder des Verbindungselements (10) bzw. des Anschlußstutzens (27) einsetzbar ist.

4. Verteiler nach einem der Ansprüche 1 bis 3, dadurch gekennzeichnet, daß das Verbindungselement (10) mit seiner halben Länge in den Verteilerblock (1) bzw. die Verteilerleiste (21) einsetzbar ist.

5. Verteiler nach einem der Ansprüche 1 bis 4, dadurch gekennzeichnet, daß in dem Hauptströmungskanal (2) ein Anschlag (11; 31) für die Zufuhrleitung (7) oder das Verbindungselement (10) bzw. den Anschlußstutzen (27) ausgebildet ist.

6. Verteiler nach einem der Ansprüche 1 bis 5, dadurch gekennzeichnet, daß zwischen der Halteeinrichtung (4 bis 6; 24 bis 26) und der Zufuhrleitung (7) oder dem Verbindungselement (10) bzw. dem Anschlußstutzen (27) ein Dichtelement (5) vorgesehen ist.

7. Verteiler nach einem der Ansprüche 1 bis 6, dadurch gekennzeichnet, daß an einer Stirnfläche (12a) eines Verteilerblocks (1a) bzw. einer Verteilerleiste (21) wenigstens eine Aussparung (13a) zum Koppeln zweier Verteilerblöcke (1a, 1b) bzw. zweier Verteilerleisten (21) eine entsprechende Aussparung (13b) an der gegenüberliegenden Stirnfläche (12b) eines zweiten Verteilerblocks (1b) bzw. der zweiten Verteilerleiste (21) so zugeordnet ist, daß in die einander zugeordneten Aussparungen (13a, 13b) ein Stift (14) einsetzbar ist.

8. Verteiler nach einem der Ansprüche 1 bis 7, dadurch gekennzeichnet, daß zum Koppeln zweier Verteilerblöcke (1a, 1b) bzw. zweier Verteilerleisten (21) an der Stirnfläche (13a) eines ersten Verteilerblocks (1a) ausgebildete Vorsprünge in an der gegenüberliegenden Stirnfläche (12b) eines zweiten Verteilerblocks (1b) ausgebildete Aussparungen eingreifen.
